# EUROPÄISCHE PATENTANMELDUNG

(11) **EP 2 261 519 A2**
(43) Veröffentlichungstag der Anmeldung: **15.12.2010**
(21) Anmeldenummer: 10163917.7
(22) Anmeldetag: 26.05.2010
(51) Int. Cl.: F16B 35/04, F16B 41/00

(54) **Schraube zum Befestigen eines ersten Bauteils an einem zweiten Bauteil**

(30) Priorität: 03.06.2009 DE 102009023790
(71) Anmelder: ElringKlinger AG, 72581 Dettingen (DE)
(72) Erfinder: Amann, Erich, 72108, Rottenburg (DE)
(74) Vertreter: Hoeger, Stellrecht & Partner Patentanwälte

(57) **Zusammenfassung**

Um eine Schraube zum Befestigen eines ersten Bauteils (102) an einem zweiten Bauteil (106), umfassend einen Haltebund (120), einen Gewindebereich (122), einen zwischen dem Gewindebereich und dem Haltebund angeordneten Anschlagbund (124) und einen zwischen dem Anschlagbund und dem Haltebund angeordneten Schaftbereich (126), zu schaffen, welche in einfacher Weise gegen ein Herausfallen aus dem ersten Bauteil (102) und eine Schrägstellung in Bezug auf ein Gewindeloch an dem zweiten Bauteil (106) gesichert ist, wird vorgeschlagen, dass die Schraube mit einem Zentrierelement (130) versehen ist, welches an dem Schaftbereich (126) angeordnet und durch welches die Schraube beim Einführen der Schraube in eine Schraubenaufnahme des ersten Bauteils relativ zu der Schraubenaufnahme zentrierbar ist.

## Beschreibung

Die vorliegende Erfindung betrifft eine Schraube zum Befestigen eines ersten Bauteils an einem zweiten Bauteil, wobei die Schraube einen Haltebund, einen Gewindebereich, einen zwischen dem Gewindebereich und dem Haltebund angeordneten Anschlagbund und einen zwischen dem Anschlagbund und dem Haltebund angeordneten Schaftbereich umfasst.

Eine solche Bundschraube ist aus dem Stand der Technik bekannt.

Zur Zentrierung der Bundschraube und Vermeidung einer Schrägstellung der Bundschraube bezüglich der Längsachse eines Gewindeloches, in welches die Bundschraube eingedreht werden soll, wird dabei eine Kunststoffhülse verwendet, welche unverlierbar mit der Bundschraube verbunden ist. Hierbei ist die aufwendige Herstellung der Hülse von Nachteil, da die Hülse separat hergestellt und gegebenenfalls beschichtet werden muss. In einem weiteren Arbeitsgang wird die Bundschraube der Hülse zugeführt und verliersicher mit der Hülse verbunden.

Der vorliegenden Erfindung liegt die Aufgabe zugrunde, eine Schraube der eingangs genannten Art zu schaffen, welche in einfacher Weise gegen ein Herausfallen aus dem ersten Bauteil und eine Schrägstellung in Bezug auf ein Gewindeloch an dem zweiten Bauteil gesichert ist.

Diese Aufgabe wird bei einer Schraube mit den Merkmalen des Oberbegriffs von Anspruch 1 erfindungsgemäß dadurch gelöst, dass die Schraube mit einem Zentrierelement versehen ist, welches an einem Schaftbereich angeordnet und durch welches die Schraube beim Einführen der Schraube in eine Schraubenaufnahme des ersten Bauteils relativ zu der Schraubenaufnahme zentrierbar ist.

Durch die Zentrierung der Schraube relativ zu der Schraubenaufnahme mittels des Zentrierelements und gegebenenfalls mittels des Anschlagbundes, die in der Längsrichtung der Schraube voneinander beabstandet sind, und durch die hierdurch erzielte Ausrichtung der Längsachse der Schraube parallel zur Längsachse der Schraubenaufnahme und damit parallel zu der Längsachse eines Gewindeloches in dem zweiten Bauteil wird eine einfache Verschraubung der Schraube mit dem zweiten Bauteil erzielt und insbesondere eine automatische Verschraubung mittels einer automatischen Verschraubungseinrichtung in einem automatisierten Fertigungsprozess ermöglicht.

Bei einer bevorzugten Ausgestaltung der Erfindung ist vorgesehen, dass das Zentrierelement relativ zu dem Schaftbereich der Schraube in einer Längsrichtung der Schraube verschiebbar ist. Hierdurch ist es möglich, einen gewünschten Abstand des Zentrierelements von dem Anschlagbund der Schraube einzustellen. Ferner ist es hierdurch möglich, wenn das Zentrierelement mit dem ersten Bauteil verbunden ist, die Position der Schraube relativ zu dem ersten Bauteil in gewünschter Weise einzustellen.

Wenn das Zentrierelement durch Reibschluss in einer Vormontageposition relativ zu dem Schaftbereich gehalten ist, so wird hierdurch erreicht, dass die axiale Position des Zentrierelements relativ zu dem Schaftbereich der Schraube nur unter Überwindung der Haftreibungskraft zwischen dem Zentrierelement und dem Schaftbereich durch eine ausreichend große externe Kraft verändert werden kann und dass im Übrigen das Zentrierelement in der gewünschten Vormontageposition relativ zu dem Schaftbereich verbleibt.

Ergänzend oder alternativ hierzu kann auch vorgesehen sein, dass das Zentrierelement durch Formschluss in einer Vormontageposition relativ zu dem Schaftbereich gehalten ist.

Ein solcher Formschluss kann beispielsweise dadurch hergestellt werden, dass der Schaftbereich der Schraube mit einer Ausnehmung, beispielsweise einer Nut, versehen ist, in welche das Zentrierelement in der Vormontageposition eingreift.

Alternativ oder ergänzend hierzu könnte auch vorgesehen sein, dass der Schaftbereich mit einem Vorsprung versehen ist, welcher in der Vormontageposition des Zentrierelements in eine an dem Zentrierelement vorgesehene Ausnehmung eingreift.

Bei einer bevorzugten Ausgestaltung der Erfindung ist vorgesehen, dass das Zentrierelement unter Formänderung auf den Schaftbereich der Schraube aufbringbar ist.

Vorzugsweise ist vorgesehen, dass das Zentrierelement auf den Schaftbereich, insbesondere in einer Radialrichtung des Schaftbereiches, aufschiebbar ist.

Das Zentrierelement ist vorzugsweise als ein ringförmiges Element mit einem Ringspalt ausgebildet.

Um zu gewährleisten, dass das an dem Schaftbereich der Schraube angeordnete Zentrierelement unabhängig von seiner Orientierung relativ zu der Schraube stets funktionsfähig ist, ist es besonders günstig, wenn das Zentrierelement im Wesentlichen symmetrisch bezüglich einer Rotation um 180° um eine Radialrichtung des Zentrierelements ausgebildet ist.

Eine solche Radialrichtung des Zentrierelements ist jede Richtung, welche senkrecht zu einer Längsmittelachse oder Ringmittelachse des Zentrierelements (Axialrichtung) ausgerichtet ist.

Grundsätzlich kann das Zentrierelement aus einem beliebigen Material gebildet sein.

Bei einer bevorzugten Ausgestaltung der Erfindung ist vorgesehen, dass das Zentrierelement ein Kunststoffmaterial umfasst, vorzugsweise ganz aus einem Kunststoffmaterial gebildet ist.

Als Kunststoffmaterial, aus welchem das Zentrierelement ganz oder teilweise gebildet ist, ist insbesondere ein Polyamid-Material geeignet.

Um eine stabile Ausrichtung der Schraube relativ zu dem Zentrierelement und damit relativ zu der Schraubenaufnahme des ersten Bauteils zu erzielen, ist es günstig, wenn das Zentrierelement mindestens ein Führungselement umfasst, durch welches der Schaftbereich in einer Durchtrittsöffnung, insbesondere einer Ringöffnung, des Zentrierelements geführt ist.

Um eine Vormontage der Schraube an dem ersten Bauteil mittels des Zentrierelements zu ermöglichen, ist es von Vorteil, wenn das Zentrierelement eine Verbindungseinrichtung umfasst, mittels welcher das Zentrierelement mit dem ersten Bauteil verbindbar ist.

Eine solche Verbindungseinrichtung kann insbesondere als eine Rasteinrichtung ausgebildet sein, mittels welcher das Zentrierelement mit dem ersten Bauteil verrastbar ist.

Insbesondere kann vorgesehen sein, dass das Zwischenelement mindestens ein Rastelement aufweist, welches beim Einführen der Schraube in eine Schraubenaufnahme des ersten Bauteils an einem Rastvorsprung des ersten Bauteils vorbei bewegbar ist, so dass das Rastelement im verrasteten Zustand des Zentrierelements den Rastvorsprung des ersten Bauteils hintergreift. Vorzugsweise ist mindestens ein solches Rastelement relativ zu mindestens einem anderen Bestandteil des Zentrierelements beweglich, insbesondere verschwenkbar. Hierdurch ist es möglich, dass das Rastelement beim Vorbeibewegen desselben an dem Rastvorsprung des ersten Bauteils so - insbesondere in einer Radialrichtung des Zentrierelements - verdrängt wird, dass das Rastelement an dem Rastvorsprung vorbeibewegt werden kann.

Wenn mindestens ein Rastelement, beispielsweise aufgrund einer Formelastizität des Zentrierelements, elastisch in eine Ausgangsstellung vorgespannt ist, so wird hierdurch erreicht, dass sich das Rastelement nach dem Vorbeibewegen an dem Rastvorsprung des ersten Bauteils selbsttätig in eine der Ausgangsstellung entsprechende Raststellung bewegt, in welcher das Rastelement den Rastvorsprung des ersten Bauteils hintergreift.

Bei einer bevorzugten Ausgestaltung der Erfindung umfasst das Zentrierelement mehrere in der Umfangsrichtung des Zentrierelements aufeinanderfolgende Segmente.

Insbesondere kann vorgesehen sein, dass mindestens zwei dieser Segmente relativ zueinander beweglich, insbesondere relativ zueinander verschwenkbar, ausgebildet sind.

Ferner kann vorgesehen sein, dass mindestens zwei dieser Segmente im Wesentlichen identisch miteinander ausgebildet sind.

Ferner kann vorgesehen sein, dass mindestens zwei Segmente so ausgebildet sind, dass sie durch Spiegelung an einer Quermittelebene des Zentrierelements und durch eine anschließende Drehung um eine Längsmittelachse oder Ringmittelachse des Zentrierelements ineinander überführbar sind.

Vorzugsweise umfasst mindestens eines der Segmente ein Rastelement, mittels welchem das Zentrierelement mit dem ersten Bauteil verrastbar ist. Insbesondere kann vorgesehen sein, dass alle Segmente des Zentrierelements ein solches Rastelement aufweisen.

Ferner kann vorgesehen sein, dass die Rastelemente von in der Umfangsrichtung aufeinanderfolgenden Segmenten abwechselnd an einer dem Anschlagbund zugewandten Seite des Zentrierelements und an einer dem Haltebund zugewandten Seite des Zentrierelements angeordnet sind.

Ferner kann vorgesehen sein, dass mindestens eines der Segmente zumindest einen Abschnitt einer Rastaufnahme für einen Rastvorsprung des ersten Bauteils umfasst.

Insbesondere kann vorgesehen sein, dass alle Segmente gemeinsam einen, vorzugsweise ringförmigen, Rastkanal zur Aufnahme eines oder mehrerer Rastvorsprünge des ersten Bauteils bilden.

Die Erstreckung des Rastkanals in der Richtung der Längsmittelachse oder Ringmittelachse des Zentrierelements entspricht vorzugsweise im Wesentlichen der Erstreckung des Rastvorsprungs längs der Längsachse der Schraubenaufnahme des ersten Bauteils.

Ferner kann vorgesehen sein, dass mindestens eines der Segmente ein Führungselement zum Führen des Schaftbereiches der Schraube durch eine Durchtrittsöffnung oder Ringöffnung des Zentrierelements umfasst.

Insbesondere kann vorgesehen sein, dass jedes Segment des Zentrierelements ein solches Führungselement umfasst.

Die erfindungsgemäße Schraube eignet sich insbesondere zur Verwendung in einer Kombination aus einer solchen Schraube und einem ersten Bauteil mit einer Schraubenaufnahme für die Schraube.

Dabei kann das erste Bauteil beispielsweise als eine Ventilhaube für einen Verbrennungsmotor ausgebildet sein.

Die Schraubenaufnahme des ersten Bauteils ist vorzugsweise einstückig mit einem Grundkörper des ersten Bauteils, beispielsweise mit einem Haubenkörper, ausgebildet.

Um eine Vormontage der Schraube mit Hilfe des Zentrierelements an dem ersten Bauteil zu ermöglichen, ist es von Vorteil, wenn das erste Bauteil eine Verbindungseinrichtung umfasst, mittels welcher das Zentrierelement der Schraube mit dem ersten Bauteil verbindbar ist.

Insbesondere kann vorgesehen sein, dass die Verbindungseinrichtung des ersten Bauteils als eine Rasteinrichtung ausgebildet ist, mittels welcher das Zentrierelement der Schraube mit dem ersten Bauteil verrastbar ist.

Dabei kann die Rasteinrichtung des ersten Bauteils einen oder mehrere Rastvorsprünge umfassen, welche in Eingriff mit einer Rasteinrichtung des Zentrierelements bringbar sind.

Insbesondere kann vorgesehen sein, dass mindestens ein Rastvorsprung der Rasteinrichtung des ersten Bauteils in Eingriff mit einer Rastaufnahme des Zentrierelements bringbar ist.

Um den Gewindebereich der Schraube in einer Vormontagestellung, vor dem Eindrehen des Gewindebereichs in ein Gewindeloch des zweiten Bauteils, vor Beschädigung zu schützen, ist es günstig, wenn die Schraube in einer Vormontagestellung derart an dem ersten Bauteil anordenbar ist, dass der Gewindebereich der Schraube zumindest teilweise, vorzugsweise im Wesentlichen vollständig, innerhalb der Schraubenaufnahme des ersten Bauteils angeordnet ist.

Dies kann insbesondere durch eine entsprechende Relativbewegung zwischen dem Schaftbereich der Schraube und dem Zentrierelement, das an dem ersten Bauteil gehalten ist, erreicht werden.

Ferner kann vorgesehen sein, dass die Schraube durch Reibschluss und/oder durch Formschluss zwischen dem Zentrierelement und dem Schaftbereich der Schraube in einer solchen Vormontagestellung gehalten ist.

Die erfindungsgemäße Ausbildung einer Schraube ermöglicht eine einfache Zentrierung der Schraube relativ zu einer Schraubenaufnahme des ersten Bauteils und eine einfache Befestigung und Vormontage der Schraube an dem ersten Bauteil.

Durch die erfindungsgemäß ermöglichte Zentrierung und Ausrichtung der Schraube im Wesentlichen parallel zu einer Längsachse der Schraubenaufnahme wird insbesondere eine automatische Verschraubung der Schraube mittels einer automatischen Verschraubungsvorrichtung in einem automatisierten Fertigungsprozess ermöglicht.

Das erfindungsgemäß verwendete Zentrierelement ist preiswert und einfach in der Herstellung und einfach zu montieren.

Das Zentrierelement kann insbesondere als ein Spritzgießteil ausgebildet sein.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Längsschnitt durch ein erstes Bauteil, bei- spielsweise eine Ventilhaube, mit einer Schraubenaufnahme und eine in die Schraubenaufnahme eingeführte Schraube mit einem Haltebund, einem Gewindebereich, einem zwischen dem Gewin- debereich und dem Haltebund angeordneten Anschlagbund, einem zwischen dem Anschlagbund und dem Haltebund angeord- neten Schaftbereich und einem an dem Schaftbereich angeord- neten Zentrierelement;
- Fig. 2: einen schematischen Längsschnitt durch das erste Bauteil und die Schraube mit Zentrierelement aus Fig. 1, wobei das Zentrierele- ment innerhalb der Schraubenaufnahme des ersten Bauteils an- geordnet und mit dem ersten Bauteil verrastet ist, und ein zwei- tes Bauteil, beispielsweise einen Zylinderkopf, mit einer Gewinde- bohrung zum Eindrehen des Gewindebereichs der Schraube;
- Fig. 3: einen schematischen Längsschnitt durch eine Baugruppe, welche das erste Bauteil, das zweite Bauteil und die beide Bauteile miteinander verbindende Schraube mit Zentrierelement umfasst, in einem montierten Zustand der Baugruppe, in welchem der Ge- windebereich der Schraube in die Gewindebohrung des zweiten Bauteils eingedreht ist und die Schraube mit ihrem Anschlagbund an dem zweiten Bauteil und mit ihrem Haltebund an dem ersten Bauteil und an dem Zentrierelement anliegt;
- Fig. 4: eine schematische perspektivische Darstellung des Zentrierele- ments, welches als ein ringförmiges Element mit einem Ringspalt ausgebildet ist;
- Fig. 5: eine schematische Seitenansicht des Zentrierelements aus Fig. 4;

- Fig. 6: eine schematische Draufsicht von oben auf das Zentrierelement aus den Fig. 4 und 5;
- Fig. 7: einen schematischen axialen Längsschnitt durch das Zentrierele- ment, längs der Linie 7-7 in Fig. 6; und
- Fig. 8: einen schematischen axialen Längsschnitt durch das Zentrierele- ment, längs der Linie 8-8 in Fig. 6.

Gleiche oder funktional äquivalente Elemente sind in allen Figuren mit denselben Bezugszeichen bezeichnet.

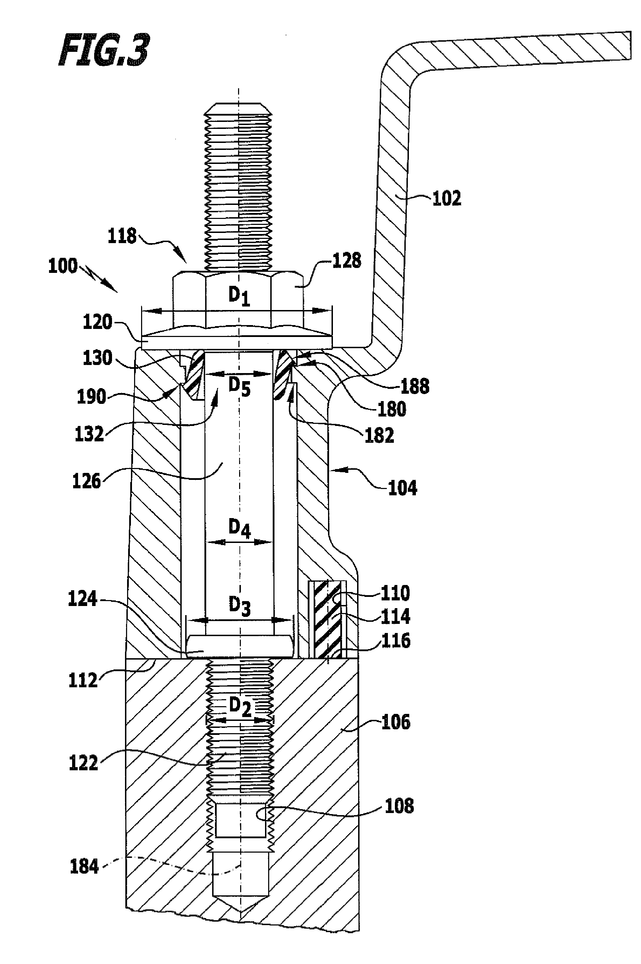

Eine in Fig. 3 ausschnittsweise dargestellte, als Ganzes mit 100 bezeichnete Baugruppe umfasst ein erstes Bauteil 102 mit einer im Wesentlichen zylindrischen Schraubenaufnahme 104, ein zweites Bauteil 106 mit einem Gewindesackloch 108, ein in einer Aufnahmenut 110 an einer Unterseite 112 des ersten Bauteils 102 aufgenommenes elastomeres Dichtelement 114, das unter Vorspannung an einer Oberseite 116 des zweiten Bauteils 106 anliegt, sowie eine Schraube 118, welche sich durch die Schraubenaufnahme 104 des ersten Bauteils 102 in das Gewindesackloch 108 des zweiten Bauteils 106 hinein erstreckt.

Statt eines Gewindesackloches 108 kann auch ein durchgehendes Loch an dem zweiten Bauteil 106 verwendet werden, das mit einem Innengewinde versehen ist, in welches ein Außengewinde der Schraube 118 eingreift.

Die Schraube 118 umfasst einen Haltebund 120 mit einem Außendurchmesser D₁, einen Gewindebereich 122 mit einem Außendurchmesser D₂, einen zwischen dem Gewindebereich 122 und dem Haltebund 120 angeordneten Anschlagbund 124 mit einem Außendurchmesser D₃, einen zwischen dem Anschlagbund 124 und dem Haltebund 120 angeordneten Schaftbereich 126 mit einem Außendurchmesser D₄ und einen an der dem Schaftbereich 126 abgewandten Seite des Haltebundes 120 angeordneten Schraubenkopf 128, der beispielsweise als ein polygonaler Schraubenkopf, insbesondere ein Sechskant-Schraubenkopf, ausgebildet sein kann.

Wie aus Fig. 3 zu ersehen ist, ist der Außendurchmesser D₁ des Haltebundes 120 vorzugsweise größer als der Außendurchmesser D₃ des Anschlagbundes 124, vorzugsweise größer als der Außendurchmesser D₄ des Schaftbereiches 126 und vorzugsweise größer als der Außendurchmesser D₂ des Gewindebereiches 122.

Der Außendurchmesser D₂ des Gewindebereiches 122 ist vorzugsweise kleiner als der Außendurchmesser D₁ des Haltebundes 120, vorzugsweise kleiner als der Außendurchmesser D₃ des Anschlagbundes 124 und vorzugsweise im Wesentlichen gleich groß wie der Außendurchmesser D₄ des Schaftbereiches 126.

Der Außendurchmesser D₃ des Anschlagbundes 124 ist vorzugsweise kleiner als der Außendurchmesser D₁ des Haltebundes 120, vorzugsweise größer als der Außendurchmesser D₂ des Gewindebereiches 122 und vorzugsweise größer als der Außendurchmesser D₄ des Schaftbereiches 126.

Der Außendurchmesser D₄ des Schaftbereiches 126 ist vorzugsweise kleiner als der Außendurchmesser D₁ des Haltebundes 120, vorzugsweise kleiner als der Außendurchmesser D₃ des Anschlagbundes 124 und vorzugsweise im Wesentlichen gleich groß wie der Außendurchmesser D₂ des Gewindebereiches 122 (grundsätzlich kann der Außendurchmesser D₄ des Schaftbereiches 126 aber auch kleiner als oder größer als der Außendurchmesser D₂ des Gewindebereiches 122 sein).

Die vorstehend genannten Bestandteile der Schraube 118 sind vorzugsweise aus einem metallischen Material, insbesondere aus einem Stahlmaterial, gebildet.

Das Material dieser Elemente der Schraube 118 kann mit einer Beschichtung versehen sein.

Die Schraube 118 ist mit einem Zentrierelement 130 versehen, das derart an dem Schaftbereich 126 der Schraube zwischen dem Anschlagbund 124 und dem Haltebund 120 angeordnet ist, dass sich der Schaftbereich 126 der Schraube 118 durch eine mittige Ringöffnung 132 des Zentrierelements 130 hindurch erstreckt.

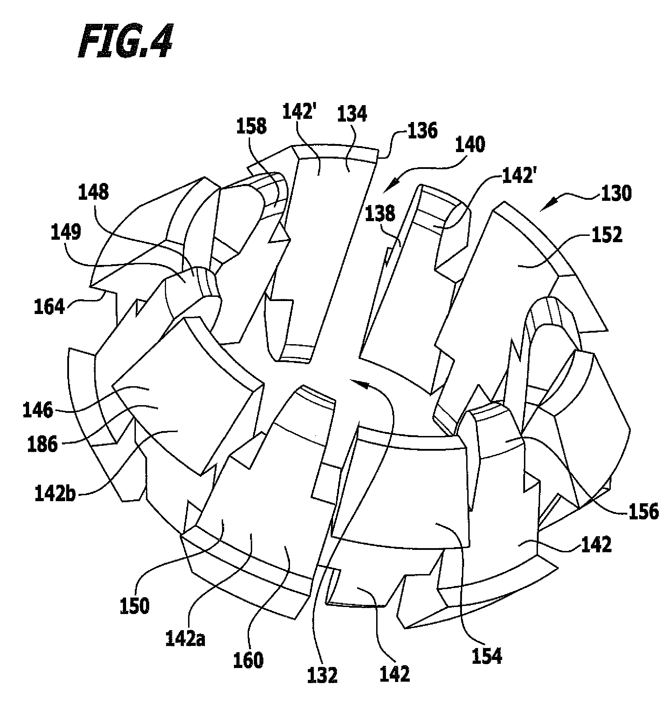

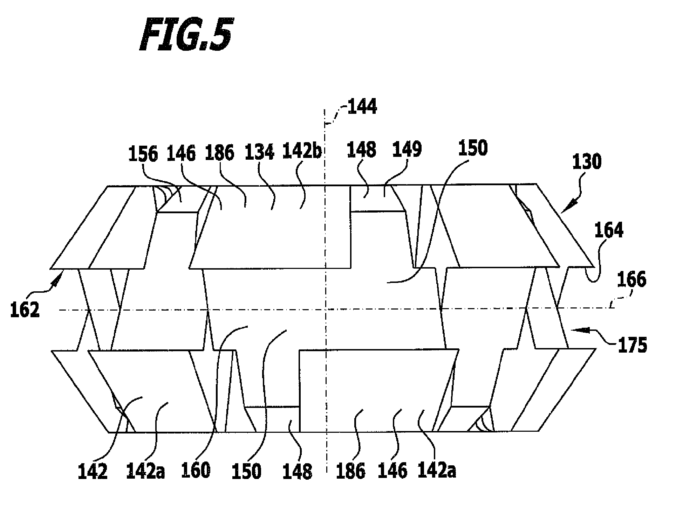

Der Aufbau des Zentrierelements 130 wird nachstehend unter Bezugnahme auf die Fig. 4 bis 8 beschrieben, in denen das Zentrierelement 130 einzeln dargestellt ist.

Das Zentrierelement 130 ist als ein ringförmiges Element ausgebildet, das einen in der Draufsicht von oben im Wesentlichen C-förmigen Grundkörper 134 umfasst, dessen einander gegenüberstehende Enden 136 und 138 durch einen radialen Ringspalt 140, welcher die Ringöffnung 132, die von dem Grundkörper 134 umgeben ist, mit einer Außenseite des Grundkörpers 134 verbindet, voneinander getrennt sind.

Der Grundkörper 134 ist aus mehreren in der Umfangsrichtung des Grundkörpers 134 aufeinanderfolgenden Segmenten 142 gebildet.

Vorzugsweise umfasst der Grundkörper 134 mindestens sechs, insbesondere mindestens acht, beispielsweise zwölf, solcher Segmente 142.

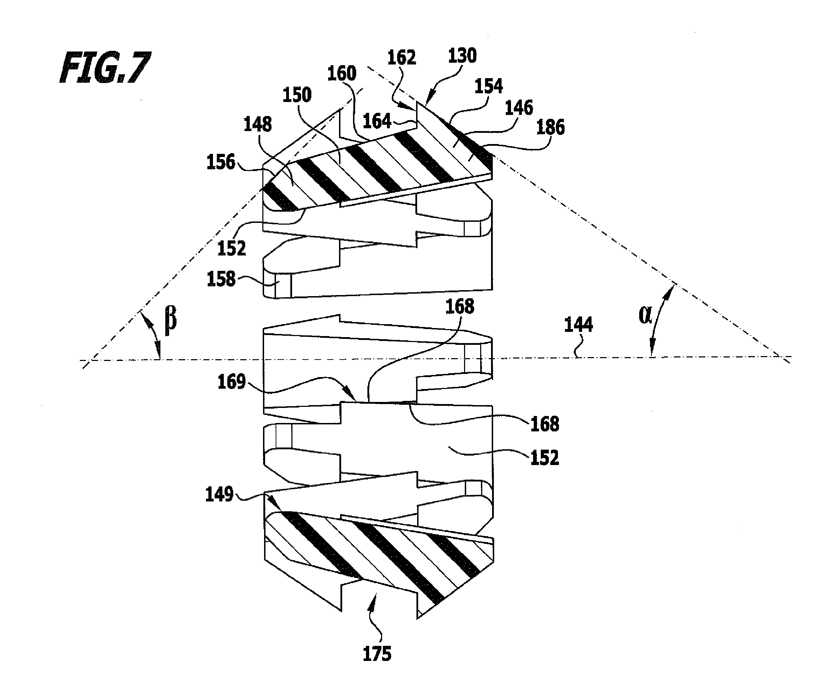

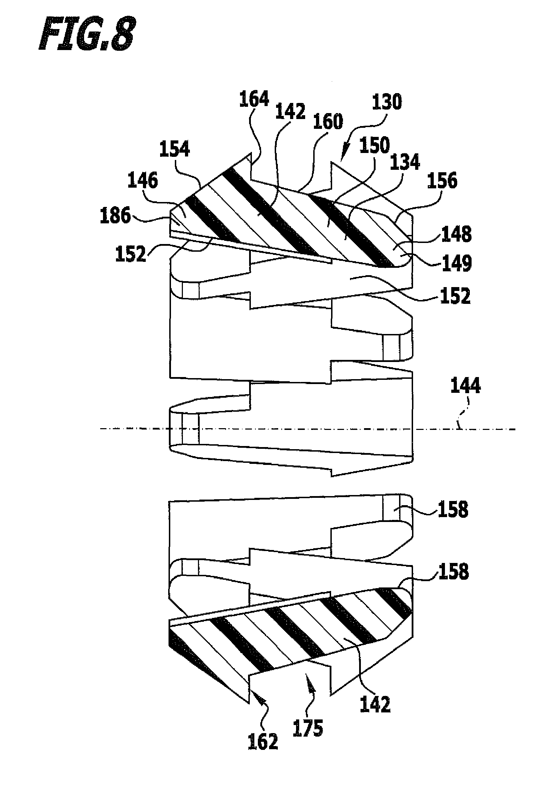

Wie am besten aus den Schnittdarstellungen der Fig. 7 und 8 zu ersehen ist, umfasst jedes Segment 142 des Grundkörpers 134 einen Keilabschnitt 146, einen dem Keilabschnitt 146 abgewandten Fingerabschnitt 148 und einen zwischen dem Keilabschnitt 146 und dem Fingerabschnitt 148 angeordneten Mittelabschnitt 150.

Der Keilabschnitt 146, der Fingerabschnitt 148 und der Mittelabschnitt 150 sind an ihrer der Ringmittelachse 144 des Zentrierelements 130 zugewandten Innenseite durch eine gemeinsame, im Wesentlichen ebene Innenfläche 152 begrenzt, welche in der in den Fig. 4 bis 8 dargestellten entspannten Ruhestellung des Zentrierelements 130 gegenüber der Ringmittelachse 144 des Zentrierelements 130 um einen kleinen Winkel von vorzugsweise höchstens 15°, beispielsweise von ungefähr 10°, geneigt ist.

Der Keilabschnitt 146 ist zur der Ringmittelachse 144 abgewandten Außenseite des Zentrierelements 130 hin durch eine, vorzugsweise im Wesentlichen ebene, Keilfläche 154 begrenzt, die in der in den Fig. 4 bis 8 dargestellten entspannten Ruhestellung des Zentrierelements 130 gegenüber der Ringmittelachse 144 um einen vergleichsweise großen Winkel α von vorzugsweise mindestens 30°, beispielsweise von ungefähr 35°, geneigt ist.

Vorzugsweise ist die Neigung der Keilfläche 154 gegenüber der Ringmittelachse 144 entgegengesetzt zur Neigung der Innenfläche 152 gegenüber der Ringmittelachse 144 gerichtet.

Der Fingerabschnitt 148 ist zur der Ringmittelachse 144 abgewandten Außenseite des Zentrierelements 130 hin durch eine Fingeraußenfläche 156 begrenzt, welche in der in den Fig. 4 bis 8 dargestellten entspannten Ruhestellung des Zentrierelements 130 unter einem vergleichsweise großen Winkel β von vorzugsweise mindestens 40°, beispielsweise von ungefähr 45°, gegenüber der Ringmittelachse 144 geneigt ist.

Vorzugsweise ist die Neigung der Fingeraußenfläche 156 gleich gerichtet wie die Neigung der Innenfläche 152 und entgegengesetzt gerichtet zur Neigung der Keilfläche 154, jeweils gegenüber der Ringmittelachse 144.

Der Fingeraußenfläche 156 gegenüber liegt eine der Ringmittelachse 144 zugewandte Kontaktfläche 158, welche der Führung des jeweiligen Segments 142 an dem Schaftbereich 126 der Schraube 118 dient.

Diese Kontaktfläche 158 ist in dem in den Fig. 4 bis 8 dargestellten entspannten Ruhezustand des Zentrierelements 130 vorzugsweise im Wesentlichen parallel zur Ringmittelachse 144 ausgerichtet.

Der Mittelabschnitt 150 ist zur der Ringmittelachse 144 abgewandten Außenseite des Zentrierelements 130 hin durch eine, vorzugsweise im Wesentlichen ebene, Mittelaußenfläche 160 begrenzt, welche gegenüber der Ringmittelachse 144 um einen vergleichsweise kleinen Winkel geneigt ist, welcher dem Neigungswinkel der Innenfläche 152 entsprechen oder etwas größer als der Neigungswinkel der Innenfläche 152 gegenüber der Ringmittelachse 144 sein kann.

Vorzugsweise ist der Neigungswinkel der Mittelaußenfläche 160 gegenüber der Ringmittelachse 144 kleiner als der Neigungswinkel der Keilfläche 154 gegenüber der Ringmittelachse 144 und kleiner als der Neigungswinkel der Fingeraußenfläche 156 gegenüber der Ringmittelachse 144.

Ferner ist die Mittelaußenfläche 160 vorzugsweise gleichsinnig gegenüber der Ringmittelachse 144 geneigt wie die Fingeraußenfläche 156 und die Innenfläche 152, während die Mittelaußenfläche 160 gegenüber der Ringmittelachse 144 vorzugsweise entgegengesetzt zur Neigungsrichtung der Keilfläche 154 gegenüber der Ringmittelachse 144 geneigt ist.

Die Keilfläche 154 und die Mittelaußenfläche 160 gehen über eine Stufe 162 ineinander über, wobei die die Stufe 162 begrenzende Anschlagfläche 164 im in den Fig. 4 bis 8 dargestellten entspannten Ruhezustand des Zentrierelements 130 vorzugsweise ungefähr senkrecht zur Ringmittelachse 144 ausgerichtet ist.

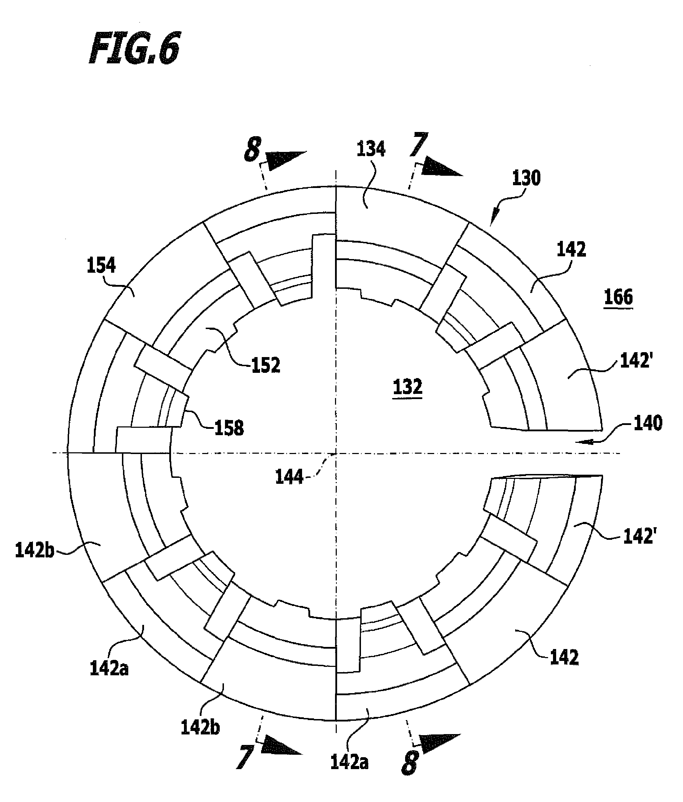

Wie am besten aus Fig. 6 zu ersehen ist, erstreckt sich jedes der Segmente 142 über einen Umfangswinkel von etwas weniger als 360°/n, wobei n die Gesamtzahl der Segmente 142 angibt.

Bei zwölf Segmenten 142 erstreckt sich also jedes Segment 142 über einen Umfangswinkel von etwas weniger als 30°.

Ferner verjüngt sich jedes der Segmente 142 von seiner der Ringmittelachse 144 abgewandten Außenseite ausgehend zu seiner der Ringmittelachse 144 zugewandten Innenseite hin, damit einander benachbarte Segmente 142 im Wesentlichen spaltfrei aneinander anschließen können.

Ferner ist Fig. 6 zu entnehmen, dass der Fingerabschnitt 148 jedes Segments 142 sich über einen kleineren Umfangswinkel erstreckt als der Mittelabschnitt 150 und der Keilabschnitt 146, so dass der Fingerabschnitt 148 jeweils schmaler ausgebildet ist als der Mittelabschnitt 150 und der Keilabschnitt 146.

Ferner ist den Fig. 4 bis 8 zu entnehmen, dass in der Umfangsrichtung des Grundkörpers 134 aufeinanderfolgende Segmente 142 eine jeweils um 180° gedrehte Orientierung aufweisen, so dass bei der einen Hälfte der Segmente 142 der Keilabschnitt 146 das untere Ende bildet, während bei der anderen Hälfte der Segmente 142 der Keilabschnitt 146 das obere Ende des jeweiligen Segments 142 bildet.

Zwei einander benachbarte Segmente 142 sind also jeweils so ausgebildet, dass sie durch Spiegelung an der Quermittelebene 166 (welche der Zeichenebene der Fig. 6 entspricht) und anschließende Drehung um die Längsachse oder Ringmittelachse 144 des Zentrierelements 130 um einen Winkel, welcher dem von einem Segment 142 jeweils überstrichenen Umfangswinkel entspricht, ineinander überführbar sind.

Dies gilt jedoch nicht für die beiden endständigen Segmente 142', deren Mittelabschnitte 150 und Keilabschnitte 146 jeweils schmaler ausgebildet sind als bei den jeweils angrenzenden Segmenten 142.

Jeweils zwei einander benachbarte Segmente 142 sind an den radial zur Ringmittelachse 144 verlaufenden seitlichen Begrenzungsflächen 168 ihrer Mittelabschnitte 150 zusammenhängend ausgebildet, und zwar derart, dass einander benachbarte Segmente 142 um diese Verbindungsstelle 169 relativ zueinander und damit relativ zu der Ringmittelachse 144, um eine im Wesentlichen senkrecht zur Ringmittelachse 144 verlaufende Schwenkachse, schwenkbar sind.

Die Verschwenkbarkeit einander benachbarter Segmente 142 des Grundkörpers 134 relativ zueinander beruht auf der Formelastizität des Grundkörpers 134.

Durch diese Formelastizität werden die Segmente 142 nach einer Auslenkung aus dem in den Fig. 4 bis 8 dargestellten Ruhezustand des Zentrierelements 130 durch eine externe Kraft wieder in diesen Ruhezustand zurückgeführt.

Der ganze Grundkörper 134 des Zentrierelements 130 ist vorzugsweise einstückig ausgebildet.

Der Grundkörper 134 kann insbesondere aus einem geeigneten Kunststoffmaterial, beispielsweise aus einem Polyamid-Material, gebildet sein.

Vorzugsweise ist der Grundkörper 134 durch ein Spritzgießverfahren hergestellt.

Um mittels des vorstehend beschriebenen Zentrierelements 130 die Schraube 118 in der Schraubenaufnahme 104 des ersten Bauteils 102 zu zentrieren und die Schraube 118 unverlierbar an dem ersten Bauteil 102 zu sichern, wird wie folgt vorgegangen:

Das Zentrierelement 130, das separat von der Schraube 118 hergestellt worden ist, wird, vorzugsweise in im Wesentlichen radialer Richtung, auf den Schaftbereich 126 der Schraube 118 aufgeschoben.

Dabei wird das Zentrierelement 130 mit den endständigen Segmenten 142', zwischen denen der Ringspalt 140 ausgebildet ist, an den Umfang des Schaftbereichs 126 angelegt und anschließend eine in radialer Richtung wirkende Kraft auf das Zentrierelement 130 ausgeübt, welche eine Verformung des Zentrierelements 130 unter Erweiterung des Ringspaltes 140 bewirkt, so dass der Schaftbereich 126, dessen Außendurchmesser D₄ größer ist als die Breite des Ringspalts 140 im entspannten Ruhezustand des Zentrierelements 130, durch den erweiterten Ringspalt 140 in die Ringöffnung 132 des Zentrierelements 130 bewegt werden kann.

Wenn der Schaftbereich 126 der Schraube 118 die Ringöffnung 132 des Zentrierelements 130 durchsetzt, verformt sich das Zentrierelement 130 in seinen unbelasteten Ruhezustand zurück.

Der lichte Durchmesser D₅ der Ringöffnung 132 entspricht dem Außendurchmesser D₄ des Schaftbereichs 126, so dass die Segmente 142 des Zentrierelements 130 mit ihren Kontaktflächen 158 am Umfang des Schaftbereichs 126 anliegen und somit der Schaftbereich 126 durch die Fingerabschnitte 148 der Segmente 142 in der Ringöffnung 132 des Zentrierelements 130 geführt ist.

Die Fingerabschnitte 148 bilden somit Führungselemente 149, durch welche der Schaftbereich 126 in der Durchtrittsöffnung oder Ringöffnung 132 des Zentrierelements 130 geführt ist.

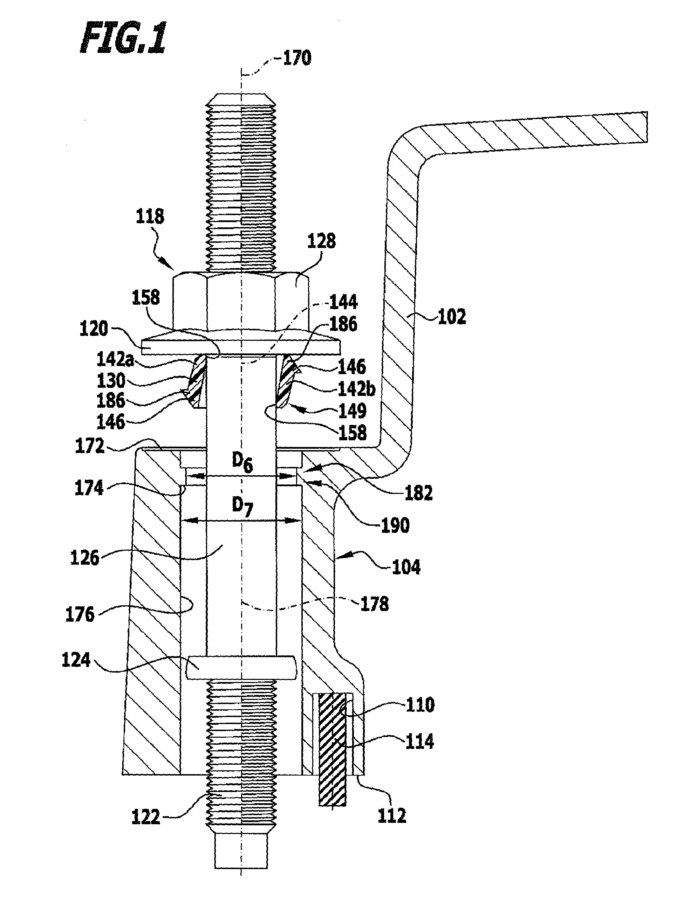

Damit ist der in Fig. 1 dargestellte Zustand erreicht, in welchem das Zentrierelement 130 an dem Schaftbereich 126 der Schraube 118 angeordnet ist.

Dabei weist die eine Hälfte der Segmente 142 des Zentrierelements 130 mit ihrem Keilabschnitt 146 vom Haltebund 120 der Schraube 118 weg zu deren Anschlagbund 124 hin; diese Segmente 142 werden im folgenden als untere Segmente 142a bezeichnet.

Die andere Hälfte der Segmente 142 des Zentrierelements 130 weist hingegen mit ihrem Keilabschnitt 146 von dem Anschlagbund 124 der Schraube 118 weg zu deren Haltebund 120 hin; diese Segmente werden im folgenden als obere Segmente 142b bezeichnet.

Die Kontaktflächen 158 der unteren Segmente 142a einerseits und der oberen Segmente 142b andererseits sind längs der Längsachse oder Längsrichtung 170 der Schraube 118 voneinander beabstandet, so dass eine besonders stabile Führung des Schaftbereichs 126 in der Ringöffnung 132 den Zentrierelements 130 erzielt wird.

Im auf die Schraube 118 aufgeschobenen Zustand stimmt die Richtung der Ringmittelachse 144 des Zentrierelements 130 mit der Längsrichtung 170 der Schraube 118 überein.

Da der lichte Durchmesser D₅ der Ringöffnung 132 des Zentrierelements 130 kleiner ist als der Außendurchmesser D₁ des Haltebundes 120 und kleiner ist als der Außendurchmesser D₃ des Anschlagbundes 124, ist das Zentrierelement 130 zwar unter Überwindung einer Haftreibungskraft längs des Schaftbereichs 126 zwischen dem Haltebund 120 und dem Anschlagbund 124 verschiebbar, kann aber nicht über den Haltebund 120 oder den Anschlagbund 124 hinweg bewegt werden, so dass das Zentrierelement 130 verliersicher an dem Schaftbereich 126 der Schraube 118 gehalten ist.

Durch Reibschluss zwischen den Kontaktflächen 158 des Zentrierelements 130 einerseits und der Umfangsfläche des Schaftbereichs 126 andererseits verbleibt das Zentrierelement 130 in seiner axialen Position relativ zu dem Schaftbereich 126, solange keine die Haftreibungskraft überwindende externe Kraft auf das Zentrierelement 130 ausgeübt wird.

Insbesondere kann das Zentrierelement 130 also in der in Fig. 1 dargestellten Position verbleiben, in welcher das Zentrierelement 130 mit seiner Oberseite an dem Haltebund 120 der Schraube 118 anliegt.

Nach dem Anordnen des Zentrierelements 130 am Schaftbereich 126 der Schraube 118 wird die Schraube 118, mit dem Gewindebereich 122 voran, in die Schraubenaufnahme 104 des ersten Bauteils 102 eingeführt.

Die Schraubenaufnahme 104 mündet an ihrem oberen Ende in eine Vertiefung 172, welche zur Aufnahme des unteren Endes des Haltebundes 120 im montierten Zustand der Baugruppe 100 vorgesehen ist.

Im Abstand vom oberen Ende der Schraubenaufnahme 104 ist in derselben ein beispielsweise ringförmig ausgebildeter Rastvorsprung 174 vorgesehen, welcher von der Begrenzungswand 176 der Schraubenaufnahme 104 zur Längsachse 178 der Schraubenaufnahme 104 hin vorspringt.

Der lichte Durchmesser D₆ der Schraubenaufnahme 104 ist daher im Bereich des Rastvorsprungs 174 kleiner als der lichte Durchmesser D₇ in den übrigen Abschnitten der Schraubenaufnahme 104 (siehe Fig. 1).

Der lichte Durchmesser D₆ der Schraubenaufnahme 104 im Bereich des Rastvorsprungs 174 ist ungefähr gleich groß wie oder geringfügig größer als der Außendurchmesser D₃ des Anschlagbundes 124 der Schraube 118, so dass der Anschlagbund 124 an dem Rastvorsprung 174 vorbeibewegt werden kann. Der Rastvorsprung 174 weist eine gewisse elastische Verformbarkeit auf, so dass er sich erforderlichenfalls etwas verformen kann, um den Anschlagbund 124 passieren zu lassen.

Ferner kann der Anschlagbund 124 wegen der Verformbarkeit des Rastvorsprungs 174 auch einen Außendurchmesser D₃ aufweisen, welcher den lichten Durchmesser D₆ der Schraubenaufnahme im Bereich des Rastvorsprungs 174 geringfügig übertrifft.

Ferner ist der lichte Durchmesser D₆ im Bereich des Rastvorsprungs 174 kleiner als der Außendurchmesser des Zentrierelements 130 im Ruhezustand.

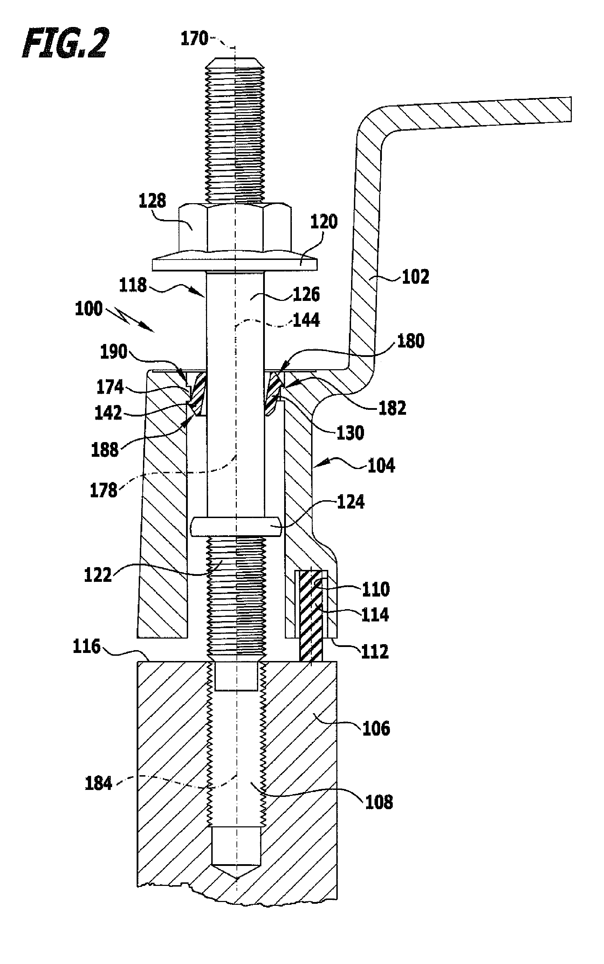

Wenn die Schraube 118 in die Schraubenaufnahme 104 eingeführt wird und das Zentrierelement 130 in den Bereich des Rastvorsprungs 174 gelangt, drückt daher der Rastvorsprung 174 der Schraubenaufnahme 104, welcher an den Keilflächen 154 der unteren Segmente 142a des Zentrierelements 130 angreift, die Keilabschnitte 146 dieser unteren Segmente 142a radial nach innen, so dass die unteren Segmente 142a relativ zu den oberen Segmenten 142b und relativ zur Ringmittelachse 144 derart verschwenkt werden, dass die Keilabschnitte 146 der unteren Segmente 142a den Rastvorsprung 174 passieren können, bis der Rastvorsprung 174 an den Anschlagflächen 164 der oberen Segmente 142b anschlägt (siehe Fig. 2).

Der Abstand zwischen den Anschlagflächen 164 der oberen Segmente 142b und den Anschlagflächen 164 der unteren Segmente 142a ist so an die Ausdehnung des Rastvorsprungs 174 längs der Längsachse 178 der Schraubenaufnahme 104 angepasst, dass zugleich mit dem Anschlagen des Rastvorsprungs 174 an den Anschlagflächen 164 der oberen Segmente 142b der Rastvorsprung 174 die Keilflächen 154 der unteren Segmente 142a verlässt, so dass sich die Keilabschnitte 146 der unteren Segmente 142a aufgrund der Formelastizität des Grundkörpers 134 des Zentrierelements 130 in ihre Ruhestellung zurückbewegen und somit den Rastvorsprung 174 hintergreifen, wobei eine Unterseite des Rastvorsprungs 174 an den Anschlagflächen 164 der unteren Segmente 142a anliegt.

In dieser in Fig. 2 dargestellten Stellung sind das Zentrierelement 130 und die Schraubenaufnahme 104 des ersten Bauteils 102 miteinander verrastet, wobei die Keilabschnitte 146 der Segmente 142 des Zentrierelements 130 Rastelemente 186 einer zentrierelementseitigen Rasteinrichtung 180 und der Rastvorsprung 174 eine schraubenaufnahmeseitige Rasteinrichtung 182 bilden.

Der Rastvorsprung 174 greift dabei in eine durch die Mittelaußenflächen 160 und die Anschlagflächen 164 der Segmente 142 des Zentrierelements 130 begrenzte, im Wesentlichen ringförmige, Rastaufnahme 175 des Zentrierelements 130 ein.

Der Rastvorsprung 174 muss sich dabei nicht über den gesamten Umfang der Schraubenaufnahme 104 erstrecken; vielmehr kann er mehrere in dieser Umfangsrichtung voneinander beabstandete Rastvorsprungelemente umfassen, welche sich jeweils nur über einen Abschnitt des Umfangs der Schraubenaufnahme 104 erstrecken.

Die zentrierelementseitige Rasteinrichtung 180 bildet eine zentrierelementseitige Verbindungseinrichtung 188, mittels welcher das Zentrierelement 130 mit dem ersten Bauteil 102 verbindbar ist.

Die schraubenaufnahmeseitige Rasteinrichtung 182 bildet eine bauteilseitige Verbindungseinrichtung 190, mittels welcher das erste Bauteil 102 mit dem Zentrierelement 130 verbindbar ist.

Durch die Verrastung mit der Schraubenaufnahme 104 ist das Zentrierelement 130 durch Formschluss gegen eine Bewegung relativ zu der Schraubenaufnahme 104 des ersten Bauteils 102 längs deren Längsachse 178 und längs der Ringmittelachse 144 des Zentrierelements 130 gesichert.

Die Schraube 118 ist hierdurch unverlierbar an der Schraubenaufnahme 104 des ersten Bauteils 102 gehalten, da die von dem Rastvorsprung 174 begrenzte Durchtrittsöffnung durch das Zentrierelement 130 blockiert ist und daher der Anschlagbund 124 nicht mehr - entgegen der Einführrichtung - durch die Durchtrittsöffnung hindurch aus der Schraubenaufnahme 104 heraus bewegt werden kann.

Die Schraube 118 kann aber, unter Ausübung einer die Haftreibung zwischen dem Zentrierelement 130 und dem Schaftbereich 126 der Schraube 118 überwindenden Kraft, in ihrer Längsrichtung 170 relativ zu dem Zentrierelement 130 bewegt werden.

Auf diese Weise ist es insbesondere möglich, die Schraube 118 so weit entgegen der Einführrichtung zurückzubewegen, dass der Gewindebereich 122 der Schraube 118 vollständig in der Schraubenaufnahme 104 aufgenommen und dadurch vor Beschädigung geschützt ist.

Zur Montage der in Fig. 3 dargestellten Baugruppe 100 wird das erste Bauteil 102 mit der unverlierbar daran gehaltenen Schraube 118 zur Anlage an dem zweiten Bauteil 106 gebracht, und die Schraube 118 wird in der Einführrichtung wieder so weit nach unten bewegt, bis der Gewindebereich 122 der Schraube 118 in Eingriff mit dem Gewindesackloch 108 des zweiten Bauteils 106 gelangt.

Anschließend wird die Schraube 118, beispielsweise mittels einer an dem Schraubenkopf 128 angreifenden automatischen Verschraubungsvorrichtung, so weit in das Gewindesackloch 108 eingedreht, bis der Anschlagbund 124 an der Oberseite 116 des zweiten Bauteils 106 anliegt und der Haltebund 120 am Boden der Vertiefung 172 des ersten Bauteils 102 anliegt.

Während des Einführ- und Verschraubungsvorgangs der Schraube 118 ist dieselbe durch das Zentrierelement 130 und durch den Anschlagbund 124 so geführt und zentriert, dass die Längsrichtung 170 der Schraube 118 im Wesentlichen mit der Längsachse 178 der Schraubenaufnahme 104 und der Längsachse 184 des Gewindesackloches 108 übereinstimmt, so dass ein Verkanten der Schraube 118 relativ zu der Schraubenaufnahme 104 und relativ zu dem Gewindesackloch 108 ausgeschlossen ist und insbesondere eine automatische Verschraubung problemlos möglich ist.

Das erste Bauteil 102 kann grundsätzlich aus einem beliebigen Material ausgebildet sein.

Vorzugsweise ist das erste Bauteil 102 aus einem geeigneten Kunststoffmaterial gebildet.

Das erste Bauteil 102 kann beispielsweise als eine Ventilhaube für einen Verbrennungsmotor ausgebildet sein.

Das zweite Bauteil 106 kann ebenfalls grundsätzlich aus einem beliebigen Material gebildet sein.

Vorzugsweise ist das zweite Bauteil 106 aus einem metallischen Material gebildet.

Das zweite Bauteil 106 kann insbesondere als ein Zylinderkopf eines Verbrennungsmotors ausgebildet sein.

## Patentansprüche

1. Schraube zum Befestigen eines ersten Bauteils (102) an einem zweiten Bauteil (106),
umfassend einen Haltebund (120), einen Gewindebereich (122), einen zwischen dem Gewindebereich (122) und dem Haltebund (120) angeordneten Anschlagbund (124) und einen zwischen dem Anschlagbund (124) und dem Haltebund (120) angeordneten Schaftbereich (126), **dadurch gekennzeichnet,**
**dass** die Schraube (118) mit einem Zentrierelement (130) versehen ist, welches an dem Schaftbereich (126) angeordnet und durch welches die Schraube (118) beim Einführen der Schraube (118) in eine Schraubenaufnahme (104) des ersten Bauteils (102) relativ zu der Schraubenaufnahme (104) zentrierbar ist.

2. Schraube nach Anspruch 1, **dadurch gekennzeichnet, dass** das Zentrierelement (130) relativ zu dem Schaftbereich (126) in einer Längsrichtung (170) der Schraube (118) verschiebbar ist.

3. Schraube nach einem der Ansprüche 1 oder 2, **dadurch gekennzeichnet, dass** das Zentrierelement (130) durch Reibschluss in einer Vormontageposition relativ zu dem Schaftbereich (126) gehalten ist.

4. Schraube nach einem der Ansprüche 1 bis 3, **dadurch gekennzeichnet, dass** das Zentrierelement (130) unter Formänderung auf den Schaftbereich (126) aufbringbar ist.

5. Schraube nach einem der Ansprüche 1 bis 4, **dadurch gekennzeichnet, dass** das Zentrierelement (130) in einer Radialrichtung des Schaftbereiches (126) auf den Schaftbereich (126) aufschiebbar ist.

6. Schraube nach einem der Ansprüche 1 bis 5, **dadurch gekennzeichnet, dass** das Zentrierelement (130) als ein ringförmiges Element mit einem Ringspalt (140) ausgebildet ist.

7. Schraube nach einem der Ansprüche 1 bis 6, **dadurch gekennzeichnet, dass** das Zentrierelement (130) im Wesentlichen symmetrisch bezüglich einer Rotation um 180° um eine Radialrichtung des Zentrierelements (130) ausgebildet ist.

8. Schraube nach einem der Ansprüche 1 bis 7, **dadurch gekennzeichnet, dass** das Zentrierelement (130) ein Kunststoffmaterial umfasst.

9. Schraube nach einem der Ansprüche 1 bis 8, **dadurch gekennzeichnet, dass** das Zentrierelement (130) mindestens ein Führungselement (149) umfasst, durch welches der Schaftbereich (126) in einer Durchtrittsöffnung (132) des Zentrierelements (130) geführt ist.

10. Schraube nach einem der Ansprüche 1 bis 9, **dadurch gekennzeichnet, dass** das Zentrierelement (130) eine Verbindungseinrichtung (188) umfasst, mittels welcher das Zentrierelement (130) mit dem ersten Bauteil (102) verbindbar ist.

11. Schraube nach Anspruch 10, **dadurch gekennzeichnet, dass** die Verbindungseinrichtung (188) als eine Rasteinrichtung (180) ausgebildet ist, mittels welcher das Zentrierelement (130) mit dem ersten Bauteil (102) verrastbar ist.

12. Schraube nach Anspruch 11, **dadurch gekennzeichnet, dass** das Zentrierelement (130) mindestens ein Rastelement (186) aufweist, welches beim Einführen der Schraube (118) in eine Schraubenaufnahme (104) des ersten Bauteils (102) an einem Rastvorsprung (174) des ersten Bauteils (102) vorbeibewegbar ist.

13. Schraube nach Anspruch 12, **dadurch gekennzeichnet, dass** mindestens ein Rastelement (186) relativ zu mindestens einem anderen Bestandteil des Zentrierelements (130) beweglich ist.

14. Schraube nach einem der Ansprüche 1 bis 13, **dadurch gekennzeichnet, dass** das Zentrierelement (130) mehrere in der Umfangsrichtung des Zentrierelements (130) aufeinanderfolgende Segmente (142) umfasst.

15. Schraube nach Anspruch 12, **dadurch gekennzeichnet, dass** mindestens zwei Segmente (142) relativ zueinander verschwenkbar ausgebildet sind.

16. Schraube nach einem der Ansprüche 14 oder 15, **dadurch gekennzeichnet, dass** mehrere Segmente (142) jeweils ein Rastelement (186) umfassen, mittels welchem das Zentrierelement (130) mit dem ersten Bauteil (102) verrastbar ist, wobei die Rastelemente (186) von in der Umfangsrichtung aufeinanderfolgenden Segmenten (142) abwechselnd an einer dem Anschlagbund (124) zugewandten Seite des Zentrierelements (130) und an einer dem Haltebund (120) zugewandten Seite des Zentrierelements (130) angeordnet sind.

17. Kombination aus einer Schraube nach einem der Ansprüche 1 bis 16 und einem ersten Bauteil (102) mit einer Schraubenaufnahme (104) für die Schraube (118).

18. Kombination nach Anspruch 17, **dadurch gekennzeichnet, dass** das erste Bauteil (102) eine Verbindungseinrichtung (190) umfasst, mittels welcher das Zentrierelement (130) der Schraube (118) mit dem ersten Bauteil (102) verbindbar ist.

19. Kombination nach einem der Ansprüche 17 oder 18, **dadurch gekennzeichnet, dass** die Schraube (118) in einer Vormontagestellung derart an dem ersten Bauteil (102) anordenbar ist, dass der Gewindebereich (122) der Schraube (118) innerhalb der Schraubenaufnahme (104) des ersten Bauteils (102) angeordnet ist.
